(19) Europäisches Patentamt / European Patent Office / Office européen des brevets

(11) EP 2 192 465 B1

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(51) Int Cl.:
***G05B 19/416*** *(2006.01)*

(21) Anmeldenummer: **08020567.7**

(22) Anmeldetag: **26.11.2008**

(54) **Regelung eines Folgeantriebs mit dynamischer Ermittlung der Dynamik der Leitachse**

Control of a follow-on drive with dynamic calculation of the dynamic of a leading axis

Réglage d'un entraînement asservi doté d'une détermination dynamique de la dynamique de l'axe conducteur

(84) Benannte Vertragsstaaten:
**DE**

(43) Veröffentlichungstag der Anmeldung:
**02.06.2010 Patentblatt 2010/22**

(73) Patentinhaber: **Siemens Aktiengesellschaft**
**80333 München (DE)**

(72) Erfinder:
- **Bauer, Peter**
  **91074 Herzogenaurach (DE)**
- **Hertinger, Klaus**
  **91056 Erlangen (DE)**
- **Stiehler, Horst**
  **09217 Burgstädt (DE)**
- **Tolkmitt, Tom**
  **90768 Fürth (DE)**
- **Weber, Curd, Dr.**
  **75056 Sulzfeld (DE)**
- **De Levie, Heino**
  **91085 Weisendorf (DE)**

(56) Entgegenhaltungen:
**EP-A- 1 353 251** **WO-A-03/005135**
**JP-A- 11 327 624**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Betriebsverfahren für eine Steuereinrichtung,

- wobei der Steuereinrichtung für eine Anzahl von Leitachsen jeweils ein Verlauf von Sollwerten vorgegeben ist,
- wobei die Steuereinrichtung mit einem vorbestimmten Takt für jede Leitachse jeweils einen aktuellen Sollwert ermittelt und anhand einer Verknüpfungsvorschrift einen aktuellen Sollwert für eine Folgeachse ermittelt,
- wobei in die Verknüpfungsvorschrift mindestens ein aktueller Sollwert einer der Leitachsen sowie mindestens ein Soll- oder Istwert eines weiteren Antriebs eingeht,
- wobei die Steuereinrichtung mit dem vorbestimmten Takt einen Antrieb gemäß dem jeweils aktuellen Sollwert der Folgeachse regelt.

Die vorliegende Erfindung betrifft weiterhin ein Betriebsprogramm, das Maschinencode aufweist, der von einer Steuereinrichtung unmittelbar abarbeitbar ist und dessen Abarbeitung durch die Steuereinrichtung bewirkt, dass die Steuereinrichtung ein derartiges Betriebsverfahren ausführt.

Weiterhin betrifft die vorliegende Erfindung einen Datenträger, auf dem in maschinenlesbarer Form ein derartiges Betriebsprogramm gespeichert ist.

Weiterhin betrifft die vorliegende Erfindung eine Steuereinrichtung zum Regeln eines Antriebs, wobei die Steuereinrichtung derart ausgestaltet ist, dass sie im Betrieb ein derartiges Betriebsverfahren ausführt.

Schließlich betrifft die vorliegende Erfindung eine Produktionsmaschine, die einen geregelten Antrieb sowie eine Steuereinrichtung aufweist, wobei die Steuereinrichtung so wie zuletzt beschrieben ausgebildet ist.

Aus der EP 1 353 251 A2 ist eine numerische Steuerung zum Antrieb einer gesteuerten Achse synchron zu einer Bezugsachse bekannt, wobei die Steuerung Bezugsachsen-Positionsbestimmungsmittel zum Bestimmen der Position der Bezugsachse basierend auf Bezugsimpulsen, welche die Bewegung der Bezugsachse repräsentieren, sowie Übersteuerungsmittel zum Setzen eines Skalenfaktors für die Übersteuerung und Bezugspositionsberechnungsmittel zum Erhalten einer Bezugsposition durch Multiplizieren eines Wertes, der die Position der Bezugsachse darstellt, bestimmt durch das Bezugsachsen-Positionsbestimmungsmittel, mit dem Skalenfaktor, der durch das Übersteuerungsmittel gesetzt wurde, aufweist.

Bei der Fertigung von Werkstücken werden manchmal mehrere Bearbeitungen simultan ausgeführt. Dies wird nachfolgend in Verbindung mit den Figuren 1 bis 5 für einfach gelagerte Fälle erläutert.

Gemäß FIG 1 soll mittels eines ersten Werkzeugs 1 eine Bearbeitung eines ersten Werkstücks 2 erfolgen. Das erste Werkstück 2 wird zu diesem Zweck in ein Werkstückfutter 3 einer ersten Spindel 4 eingespannt und mittels eines nicht näher dargestellten ersten Spindelantriebs rotierend um eine erste Spindelachse 5 bewegt. Die Rotation der ersten Spindel 4 um die erste Spindelachse 5 kann je nach Lage des Einzelfalls lage- oder drehzahlgeregelt sein. Der Einfachheit halber wird nachfolgend eine rotationssymmetrische Bearbeitung des ersten Werkstücks 2 angenommen. In diesem Fall ist eine Drehzahlregelung des ersten Spindelantriebs ausreichend.

Das erste Werkzeug 1 ist mittels eines entsprechenden Radialantriebs radial bewegbar, also auf die erste Spindelachse 5 zu bzw. von ihr weg.

Um das erste Werkstück 2 in Richtung der ersten Spindelachse 5 gesehen an verschiedenen Stellen bearbeiten zu können, muss das erste Werkstück 2 zusammen mit dem Werkstückfutter 3 der ersten Spindel 4 mittels eines entsprechenden ersten Axialantriebs parallel zur ersten Spindelachse 5 bewegt werden. Die Radialbewegung des ersten Werkzeugs 1 und die Axialbewegung des ersten Werkstücks 2 müssen - selbstverständlich - aufeinander abgestimmt sein. Es wird daher - sowohl im Stand der Technik als auch bei der vorliegenden Erfindung - eine Bahn als Funktion eines zurückgelegten ersten Verfahrweges s1 definiert, so dass bekannt ist, welche erste Radialposition x1 die Spitze des ersten Werkzeugs 1 bei einem bestimmten Wert des ersten Verfahrweges s1 annehmen soll und welche erste Axialposition z1 das erste Werkstück 2 bei demselben Wert des ersten Verfahrweges s1 annehmen soll. Es ist also bekannt, welche Bahn der Radialantrieb des ersten Werkzeugs 1 und der Axialantrieb der ersten Spindel 4 abfahren müssen. Eine mögliche Bahn ist - rein beispielhaft - in FIG 2 dargestellt. Die entsprechende Vorgabe an eine Steuereinrichtung (in FIG 1 nicht dargestellt), welche den ersten Axialantrieb und den ersten Radialantrieb korrespondierend ansteuert, ist Fachleuten allgemein bekannt.

In der Regel sind entsprechend der Darstellung von FIG 2 die Lagesollwerte mehrere Antriebe über die vorgegebene Bahn miteinander gekoppelt. Alternativ können die Bewegungen der Antriebe isoliert vorgegeben sein.

Das erste Werkstück 2 soll - beispielsweise zur Beschleunigung des Fertigungsprozesses - simultan zur Bearbeitung durch das erste Werkzeug 1 mittels eines zweiten Werkzeugs 6 bearbeitet werden. Analog zur Bearbeitung durch das erste Werkzeug 1 wird auch für die Bearbeitung des ersten Werkstücks 2 durch das zweite Werkzeug 6 eine entsprechende zweite Bahnkurve als Funktion eines zurückgelegten zweiten Verfahrweges s2 definiert. Rein beispielhaft ist eine mögliche Bahn in FIG 3 dargestellt. Anhand der vorgegebenen Bahn ist bei Vorgabe eines konkreten Wertes für den zweiten Verfahrweg s2 ermittelbar, wie das zweite Werkzeug 6 relativ zum ersten Werkstück 2 axial (diese Positionierung wird nachfolgend als zweite Axialposition z2 bezeichnet) und axial (diese Positionierung wird nachfolgend als zweite Radialposition x2 bezeichnet) positioniert sein muss.

Das zweite Werkzeug 2 ist sowohl parallel zur ersten Spindelachse 5 als auch radial zur ersten Spindelachse 5 bewegbar. Um die entsprechende Bearbeitung zu bewirken, wie sie durch die definierte Bahn (beispielhaft siehe FIG 3) definiert ist, müssen die Antriebe des zweiten Werkzeugs 6 entsprechend angesteuert werden. Zusätzlich muss bei der Ermittlung der korrekten Positionierung des zweiten Werkzeugs 6 in Axialrichtung zu jedem Zeitpunkt dynamisch berücksichtigt werden, an welcher ersten Axialposition z1 das erste Werkstück 2 gerade positioniert ist. Die korrekte Axialposition des zweiten Werkzeugs 6 ergibt sich bei dem Beispiel gemäß FIG 1 als Differenz der "eigenen" Axialposition z2 und der jeweils aktuellen Axialposition z1 der ersten Spindel 4. Auch diese Vorgehensweise ist Fachleuten allgemein bekannt.

In analoger Weise ist es gemäß FIG 4 möglich, dass simultan zur Bearbeitung des ersten Werkstücks 2 mittels des ersten und des zweiten Werkzeugs 1, 6 ein zweites Werkstück 7 bearbeitet werden soll. Die Bearbeitung des zweiten Werkstücks 7 erfolgt mittels eines dritten Werkzeugs 8, das zusammen mit dem zweiten Werkzeug 6 bewegt wird.

Das zweite Werkstück 7 wird zur Bearbeitung in einem Werkstückfutter 9 einer zweiten Spindel 10 eingespannt und um eine zweite Spindelachse 10' rotiert. Es wird - analog zur Bearbeitung des ersten Werkstücks 2 durch das erste und das zweite Werkzeug 1, 6 - eine entsprechende Bahn als Funktion eines dritten Verfahrweges s3 vorgegeben, siehe rein beispielhaft FIG 5. Die Bahn wird zur Ansteuerung eines Axial- und eines Radialantriebs der zweiten Werkstücksspindel 10 herangezogen. Bei der Ermittlung der jeweiligen aktuellen Lagesollwerte für die zweite Werkstückspindel 10 müssen jedoch die Radial- und die Axialpositionierungen x2, z2 des zweiten Werkzeugs 6 mit berücksichtigt werden.

Die Bahnen gemäß den einzelnen Bearbeitungsvorgängen werden - sowohl im Stand der Technik als auch im Rahmen der vorliegenden Erfindung - unabhängig voneinander programmiert. Bei der Ansteuerung des Axialantriebs für das zweite Werkzeug 6 und bei der Ansteuerung der Antriebe der zweiten Spindel 10 treten daher Sollwertüberlagerungen auf. Die Dynamiken der einzelnen Bewegungsanforderungen überlagern sich somit.

Jeder Antrieb weist eine maximal mögliche Dynamik auf. Das gilt zwar nicht nur für den Radialantrieb des zweiten Werkzeugs 6 und die Antriebe der zweiten Werkstückspindel 10, sondern für alle Antriebe. Wegen der Geltung für alle Antriebe gilt diese Aussage jedoch auch für die genannten Antriebe. Die mögliche Dynamik des jeweiligen Antriebs umfasst sowohl den möglichen Verfahrbereich als auch die möglichen zeitlichen Ableitungen des Verfahrbereichs, also die Verfahrgeschwindigkeit, die Verfahrbeschleunigung und gegebenenfalls den Verfahrruck, sowie das mögliche Moment bzw. die mögliche Kraft. Damit konkret der Axialantrieb des zweiten Werkzeugs 6 und die Antriebe der zweiten Spindel 10 ihren Lagesollwerten folgen können, müssen die Ansteuerungen der entsprechenden Antriebe durch ihre entsprechenden Lagesollwerte die jeweils maximal möglichen Dynamiken einhalten.

Damit konkret der Axialantrieb für das zweite Werkzeug 6 und die Antriebe der zweiten Spindel 10 nicht überfordert werden, sind im Stand der Technik verschiedene Vorgehensweisen bekannt. So ist beispielsweise bekannt, die mögliche Dynamik der Antriebe, welche überlagerte Bewegungen ausführen, statisch aufzuteilen, beispielsweise im Verhältnis 70:30 oder im Verhältnis 50:50. Nachteilig ist bei dieser Vorgehensweise, dass die mögliche Dynamik des jeweiligen Antriebs möglicherweise nicht optimal ausgenutzt wird und daher suboptimale Bearbeitungszeiten resultieren.

Weiterhin ist bekannt, die Bewegungen statisch vorbestimmten Zeitabschnitten zuzuordnen. Auch in diesem Fall resultieren suboptimale Bearbeitungszeiten. Darüber hinaus ist ein - meist erheblicher - zusätzlicher Programmieraufwand erforderlich.

Theoretisch ist weiterhin denkbar, ein entsprechendes Programm, welches die Dynamik je nach Lage des Einzelfalls ausnutzt, in seiner Gesamtheit zu erstellen. Diese Vorgehensweise ist zum einen extrem aufwändig und komplex. Darüber hinaus ist eine Berücksichtigung zeitlich variabler Größen kaum möglich.

Die obenstehend erläuterten Problematiken können nicht nur bei lagegeregelten Antrieben auftreten. Die gleichen Problematiken können auch auftreten, wenn eine Drehzahl-, Beschleunigungs-, Momentregelung usw. vorgenommen wird.

Die Aufgabe der vorliegenden Erfindung besteht darin, Möglichkeiten zu schaffen, auf Grund derer bei Achsen, deren Sollwerte durch Überlagerung eines Sollwertes einer Leitachse und mindestens eines weiteren Soll- oder Istwertes ermittelt werden, auf einfache Weise ein zeitoptimaler Betrieb möglich ist.

Die Aufgabe wird durch ein Betriebsverfahren für eine Steuereinrichtung mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren für eine Steuereinrichtung der eingangs genannten Art dadurch ausgestaltet, dass die Steuereinrichtung

- in jedem Takt prüft, ob eine Dynamik, mit welcher der Antrieb auf Grund des Regelns auf den aktuellen Sollwert der Folgeachse angesteuert wird, eine obere Dynamikgrenze überschreitet, und
- in dem Fall, dass die Dynamik, mit welcher der Antrieb angesteuert wird, die obere Dynamikgrenze überschreitet, ab dem nächsten Takt die Ermittlung der aktuellen Sollwerte für mindestens eine der Leitachsen derart modifiziert, dass der Antrieb mit einer reduzierten Dynamik angesteuert wird, bis die reduzierte Dynamik, mit welcher der Antrieb angesteuert wird, eine untere Dynamikgrenze unterschreitet.

Durch diese Vorgehensweise wird erreicht, dass zwar weiterhin beispielsweise die einzelnen Bearbeitungsvorgänge der Werkstücke unabhängig voneinander programmiert werden können und dennoch eine automatisierte Reduzierung der Dynamik erfolgt, wobei die Reduzierung der Dynamik jedoch nur dann vorgenommen wird, wenn dies erforderlich ist. Wenn hingegen die Ansteuerung des Antriebs entsprechend der Verknüpfung der unmodifizierten Sollwerte der Leitachsen unkritisch ist, erfolgt keine Dynamikreduzierung.

In einer bevorzugten Ausgestaltung der vorliegenden Erfindung ist vorgesehen, dass die Steuereinrichtung in dem Fall, dass die Dynamik, mit welcher der Antrieb angesteuert wird, die obere Dynamikgrenze überschreitet, für jede der Leitachsen unabhängig von den anderen Leitachsen entscheidet, ob und ggf. in welchem Umfang sie die Ermittlung der aktuellen Sollwerte für diese Leitachse modifiziert. Durch diese Ausgestaltung vereinfacht sich die Vorgehensweise. Insbesondere im Falle einer softwaretechnischen Realisierung des Betriebsverfahrens ergibt sich eine einfachere Programmierung.

In einer weiterhin bevorzugten Ausgestaltung der vorliegenden Erfindung ist vorgesehen, dass die Steuereinrichtung in dem Fall, dass die Dynamik, mit welcher der Antrieb angesteuert wird, die obere Dynamikgrenze überschreitet, die Ermittlung der aktuellen Sollwerte für die jeweilige Leitachse nur dann modifiziert, wenn ein durch die jeweilige Leitachse bewirkter Anteil an der Dynamik, mit welcher der Antrieb angesteuert wird, und die Dynamik, mit welcher der Antrieb angesteuert wird, dasselbe Vorzeichen aufweisen. Durch diese Vorgehensweise wird erreicht, dass die aktuellen Sollwerte von Leitachsen nur dann modifiziert ermittelt werden, wenn die jeweilige Leitachse einen "kritischen" Beitrag zur Ansteuerung des Folgeantriebs liefert.

In einer weiterhin bevorzugten Ausgestaltung der vorliegenden Erfindung ist vorgesehen, dass die Steuereinrichtung in dem Fall, dass die Dynamik, mit welcher der Antrieb angesteuert wird, die obere Dynamikgrenze überschreitet, die Ermittlung der aktuellen Sollwerte für die jeweilige Leitachse in Abhängigkeit von einem Übersetzungsverhältnis modifiziert, mit dem eine Änderung der Sollwerte für diese Leitachse eine Änderung der Sollwerte für die Folgeachse bewirkt. Durch diese Ausgestaltung kann erreicht werden, dass beispielsweise die Ermittlung der aktuellen Sollwerte nur für diejenigen Leitachsen modifiziert wird, welche in besonders starkem Umfang in die aktuellen Sollwerte der Folgeachse eingehen.

In vielen Fällen sind der Steuereinrichtung zusätzlich zu den Verläufen auch Maximalgeschwindigkeiten vorgegeben, mit denen die Leitachsen maximal verfahren werden sollen. In einer weiter bevorzugten Ausgestaltung der vorliegenden Erfindung ist vorgesehen, dass die Steuereinrichtung für jede Leitachse bei der Entscheidung, ob und ggf. in welchem Umfang sie die Ermittlung der aktuellen Sollwerte für diese Leitachse modifiziert, die jeweilige Maximalgeschwindigkeit berücksichtigt. Diese Ausgestaltung nutzt die Erkenntnis, dass reine Positioniervorgänge, welche nicht mit einer Bearbeitung eines Werkstücks verbunden sind, oftmals in einem Eilgang ausgeführt werden, während Bearbeitungen meist mit erheblich niedrigeren Geschwindigkeiten ausgeführt werden. Die Maximalgeschwindigkeit ist daher ein einfaches Unterscheidungskriterium für reine Positioniervorgänge von Bearbeitungsvorgängen. Da Bearbeitungsvorgänge oftmals aus technologischen Gründen mit bestimmten Geschwindigkeiten ausgeführt werden, während reine Positioniervorgänge geschwindigkeitsunkritisch sind, sollten bevorzugt die Geschwindigkeiten von Eilgangbewegungen reduziert werden.

In einer weiteren Ausgestaltung der vorliegenden Erfindung ist vorgesehen, dass der Steuereinrichtung zusätzlich zu den Verläufen auch Typen vorgegeben sind. In diesem Fall kann die Steuereinrichtung für jede Leitachse bei der Entscheidung, ob und gegebenenfalls in welchem Umfang sie die Ermittlung der aktuellen Sollwerte für diese Leitachse modifiziert, den jeweiligen Typ berücksichtigen. Die Typzuordnung kann beispielsweise zur Unterscheidung von Eilgangbewegungen, Grobbearbeitungen, Feinbearbeitungen und Endbearbeitungen dienen. Auch andere Unterscheidungen sind möglich. So ist beispielsweise die Modifizierung der Ermittlung der aktuellen Sollwerte für eine Bewegung, die mit einem Schruppvorgang (Grobbearbeitung) korrespondiert, eher tolerierbar als die Modifizierung bei einer Bewegung, welche mit einem Schlicht- (Feinbearbeitung) oder einem Schleifvorgang (Endbearbeitung) korrespondiert.

Beim Betrieb der Steuereinrichtung kann es geschehen, dass Zustände auftreten (sogenannte "exceptions"), während derer aus übergeordneten technologischen Gründen kurzzeitig eine Reduzierung der Ausführungsgeschwindigkeit nach Möglichkeit unterbleiben sollte. In einer bevorzugten Ausgestaltung der vorliegenden Erfindung ist daher vorgesehen,

- dass der Steuereinrichtung während des Regelns des Antriebs Informationen zugeführt werden,
- dass die Steuereinrichtung anhand der ihr zugeführten Informationen ermittelt, ob ein kritischer Zustand mindestens einer Leitachse oder mindestens eines Antriebs vorliegt, und
- dass die Steuereinrichtung bei der Entscheidung, ob und ggf. in welchem Umfang sie die Ermittlung der aktuellen Sollwerte für die Leitachsen modifiziert, mit berücksichtigt, ob ein kritischer Zustand mindestens einer Leitachse oder mindestens eines Antriebs vorliegt.

In der überwiegenden Mehrzahl von Fällen sind die Sollwerte Lagesollwerte. Alternativ können die Sollwerte eine zeitliche Ableitung von Lagesollwerten, Moment- oder Kraftsollwerte sein. Weiterhin korrespondieren die Sollwerte in der Regel miteinander.

Die Aufgabe wird weiterhin durch ein Betriebsprogramm gelöst, das Maschinencode aufweist, der von einer Steuereinrichtung unmittelbar abarbeitbar ist. Die Abarbeitung des Maschinencodes durch die Steuereinrichtung bewirkt, dass die Steuereinrichtung ein erfindungsgemäßes Betriebsverfahren ausführt.

Die Aufgabe wird weiterhin durch einen Datenträger gelöst, auf dem in maschinenlesbarer Form ein derartiges Betriebsprogramm gespeichert ist.

Weiterhin wird die Aufgabe durch eine Steuereinrichtung zum Regeln eines Antriebs gelöst, wobei die Steuereinrichtung derart ausgestaltet ist, dass sie im Betrieb ein erfindungsgemäßes Betriebsverfahren ausführt.

Schließlich wird die Aufgabe durch eine Produktionsmaschine gelöst, die einen geregelten Antrieb sowie eine Steuereinrichtung aufweist, wobei die Steuereinrichtung wie zuletzt beschrieben ausgebildet ist.

Weitere Vorteile und Einzelheiten ergeben sich aus der nachfolgenden Beschreibung von Ausführungsbeispielen in Verbindung mit den Zeichnungen. Es zeigen in Prinzipdarstellung:

| | |
|---|---|
| FIG 1 | schematisch eine Produktionsmaschine, |
| FIG 2 und 3 | Bahnen, |
| FIG 4 | eine weitere Produktionsmaschine, |
| FIG 5 | eine weitere Bahn, |
| FIG 6 | schematisch eine Produktionsmaschine, |
| FIG 7 und 8 | Ablaufdiagramme, |
| FIG 9 | ein Datenwort, |
| FIG 10 und 11 | Ablaufdiagramme, |
| FIG 12 | einen Maximalgeschwindigkeitsverlauf, |
| FIG 13 | ein Ablaufdiagramm, |
| FIG 14 | einen Typverlauf sowie |
| FIG 15 und 16 | Ablaufdiagramme. |

Die vorliegende Erfindung wird nachstehend - beginnend mit FIG 6 - für eine Produktionsmaschine beschrieben, deren Antriebe 11a bis 11f lagegeregelt sind. Die den Antrieben 11a bis 11f zugeführten Sollwerte sind daher Lagesollwerte x1*, x2*, x3'*, z1*, z2'*, z3'*. Die vorliegende Erfindung ist jedoch ebenso anwendbar, wenn die Sollwerte die erste, zweite, dritte usw. zeitliche Ableitung von Lagesollwerten ist, also Geschwindigkeits- oder Drehzahlsollwerte, Beschleunigungssollwerte, Rucksollwerte usw. Auch könnten die den Antrieben 11a bis 11f zugeführten Sollwerte Moment- oder Kraftsollwerte sein. Die nachfolgenden Ausführungen sind daher nicht auf die Anwendung bei Lagesollwerten beschränkt. Unabhängig von der Art der verwendeten Sollwerte sollten die Sollwerte jedoch miteinander korrespondieren, das heißt gleichartig sein. Es sollte sich also beispielsweise einheitlich um Geschwindigkeitssollwerte oder um Kraftsollwerte handeln. Ein Mischen verschiedenartiger Sollwerte ist jedoch ebenfalls möglich.

Entsprechend dem Ausführungsbeispiel von FIG 6 sind die Antriebe 11a bis 11f lagegeregelt. Die Lageregelung erfolgt über eine Steuereinrichtung 12, die ebenfalls Bestandteil der Produktionsmaschine ist. Die Steuereinrichtung 12 ist zum Regeln der Antriebe 11a bis 11f ausgebildet.

Die Anzahl an Antrieben 11a bis 11f kann je nach Anwendung variieren. Minimal beträgt sie zwei. In der Regel sind mehr als zwei Antriebe 11a bis 11f vorhanden. Dargestellt sind in FIG 6 sechs derartiger Antriebe 11a bis 11f. Diese Darstellung ist jedoch rein beispielhaft.

Die Produktionsmaschine kann ebenfalls nach Bedarf ausgebildet sein. Nachstehend wird angenommen, dass die Produktionsmaschine von FIG 6 mit der Produktionsmaschine korrespondiert, die obenstehend in Verbindung mit FIG 4 erläutert wurde. In diesem Fall korrespondiert je einer der Antriebe 11a bis 11f mit je einem der Antriebe, welche die Axialpositionierungen z1 bis z3 vornehmen und die Radialpositionierungen x1 bis x3 vornehmen.

Der Vollständigkeit halber sei weiterhin erwähnt, dass zusätzlich zu den dargestellten, lagegeregelten Antrieben 11a bis 11f weitere Antriebe vorhanden sein können. Diese weiteren Antriebe sind im Rahmen der vorliegenden Erfindung nicht von Bedeutung und daher nicht dargestellt.

Die Steuereinrichtung 12 ist in der Regel als softwareprogrammierbare Steuereinrichtung ausgebildet. Die Steuereinrichtung 12 wird in diesem Fall mittels eines Betriebsprogramms 13 programmiert. Auf Grund der Programmierung mit dem Betriebsprogramm 13 ist die Steuereinrichtung 12 derart ausgestaltet, dass sie ein Betriebsverfahren ausführt, das nachfolgend näher erläutert werden wird.

Das Betriebsprogramm 13 weist gemäß FIG 6 Maschinencode 14 auf. Der Maschinencode 14 ist von der Steuereinrichtung 12 unmittelbar abarbeitbar. Das Abarbeiten des Maschinencodes 14 durch die Steuereinrichtung 12 bewirkt, dass die Steuereinrichtung 12 das obenstehend erwähnte Betriebsverfahren ausführt.

Das Betriebsprogramm 13 kann der Steuereinrichtung 12 auf verschiedene Weise zugeführt werden. Beispielsweise kann das Betriebsprogramm 13 der Steuereinrichtung 12 über eine Anbindung an ein Rechnernetz 15 (beispielsweise das World Wide Web) zugeführt werden. Auch ist möglich, dass das Betriebsprogramm 13 auf einem mobilen Datenträger 16 gespeichert wird und der Steuereinrichtung 12 über den Datenträger 16 zugeführt wird. Der mobile Datenträger 16 kann nach Bedarf ausgebildet sein. Schematisch dargestellt ist in FIG 6 eine Ausgestaltung des mobilen Datenträgers 16 als USB-Memory-stick. Der Datenträger 16 könnte alternativ jedoch beispielsweise als CD-ROM oder als SD-Speicherkarte ausgebildet sein.

Gemäß FIG 7 wird der Steuereinrichtung 12 in einem Schritt S1 für eine Anzahl von Leitachsen jeweils eine Bahn vorgegeben, so dass für jede Leitachse anhand der für die jeweilige Leitachse vorgegebenen Bahn jeweils ein Verlauf von Lagesollwerten x1* bis x3*, z1* bis z3* bestimmt ist. Beispielsweise können, wie in FIG 6 angedeutet, Bahnen entsprechend den FIG 2, 3 und 5 vorgegeben werden.

Mittels der Bahnen werden Bewegungen vorgegeben, bei denen die Sollwertverläufe mehrerer Leitachsen miteinander interpoliert sind. Je nach Lage des Einzelfalls ist jedoch ebenso eine - abschnittweise oder vollständige - Vorgabe der Sollwertverläufe unabhängig voneinander möglich.

In einem Schritt S2 prüft die Steuereinrichtung 12, ob ein Datenwort DW gesetzt ist. Wenn das Datenwort DW nicht gesetzt ist, ermittelt die Steuereinrichtung 12 in einem Schritt S3 für jede Leitachse jeweils einen aktuellen Lagesollwert x1* bis x3*, z1* bis z3*. Beispielsweise ermittelt die Steuereinrichtung 12 für die drei Bearbeitungen, die obenstehend in Verbindung mit FIG 4 erläutert wurden, jeweils deren Soll-Axialpositionierung z1* bis z3* und deren Soll-Radialpositionierung x1* bis x3*.

Wenn das Datenwort DW gesetzt ist, ermittelt die Steuereinrichtung 12 in einem Schritt S4 ebenfalls für jede Leitachse jeweils den aktuellen Lagesollwert x1* bis x3*, z1* bis z3*. Im Unterschied zu dem Schritt S3 wird im Rahmen des Schrittes S4 jedoch die Ermittlung des aktuellen Lagesollwerts x1* bis x3*, z1* bis z3* für mindestens eine der Leitachsen modifiziert. Auf die Art der Modifikation wird später näher eingegangen werden.

In einem Schritt S5 ermittelt die Steuereinrichtung 12 für jede Folgeachse gemäß einer jeweiligen Verknüpfungsvorschrift jeweils einen aktuellen Lagesollwert z2'*, z3'*, x3'*. In die Verknüpfungsvorschriften gehen gemäß Ausführungsbeispiel die aktuellen Lagesollwerte x1* bis x3*, z1* bis z3* der Leitachsen ein. Gegebenenfalls können in die Verknüpfungsvorschriften auch Istwerte von Antrieben 11a bis 11f eingehen. In jedem Fall gehen in die Verknüpfungsvorschriften jeweils mindestens zwei Werte ein, wobei mindestens einer der Werte ein Sollwert s1* bis x3*, z1* bis z3* ist. Der andere Wert kann alternativ ein Istwert oder ein Sollwert s1* bis x3*, z1* bis z3* sein.

Der Schritt S5 wird nachfolgend unter Bezugnahme auf die Produktionsmaschine gemäß FIG 4 veranschaulicht. Die entsprechenden Erläuterungen dienen jedoch, wie erwähnt, nur zur Veranschaulichung. Sie sind nicht einschränkend zu verstehen.

Wie obenstehend in Verbindung mit FIG 4 erläutert, muss beispielsweise bei der Positionierung des zweiten Werkzeugs 6 in Axialrichtung die Positionierung der ersten Spindel 4 in Axialrichtung berücksichtigt werden. Der Lagesollwert z2'* für die Axialpositionierung des zweiten Werkzeugs 6 ergibt sich dementsprechend zu

$$z2'^* = z2^* - z1^*.$$

z2* und z1* sind die Lagesollwerte, die sich gemäß der programmierten Bewegung des zweiten Werkzeugs 6 und der programmierten Bewegung der ersten Spindel 4, also entsprechend den vorgegebenen jeweiligen Bahnen, ergeben.

In analoger Weise ergibt sich der Lagesollwert z3'* für die zweite Spindel 10 zu

$$z3'^* = z3^* + z2'^* = z3^* + z2^* - z1^*.$$

Ebenso ergibt sich der Lagesollwert x3'* für die Radialpositionierung der zweiten Spindel 10 zu

$$x3'^* = x3^* - x2^* - x0.$$

x0 ist ein konstanter Offset (siehe FIG 4).

Aus obiger Gleichung ist auch ersichtlich, dass Kaskadierungen auftreten können. So ist beispielsweise der Lagesollwert z2'* einerseits der Lagesollwert einer Folgeachse, weil er aus den Lagesollwerten z1* und z2* ermittelt wird. Andererseits ist der Lagesollwert z2'* auch ein Lagesollwert einer Leitachse, weil er in die Ermittlung des Lagesollwerts z3'* eingeht.

Gemäß dem obenstehend in Verbindung mit FIG 4 erläuterten Beispiel ist die Verknüpfung der Lagesollwerte x1* bis x3*, z1* bis z3* der Leitachsen eine einfache additive Verknüpfung. Eine derartige Verknüpfung stellt jedoch nur den einfachsten Fall einer Verknüpfung dar. Es sind auch andere Verknüpfungen möglich, beispielsweise nicht lineare Transformationen oder Kopplungen, die gegebenenfalls auch kaskadiert sein können.

In einem Schritt S6 führt die Steuereinrichtung 12 für jeden Antrieb 11a bis 11f entsprechend dem für den jeweiligen Antrieb 11a bis 11f jeweils gültigen aktuellen Lagesollwert x1*, x2*, x3'*, z1*, z2'*, z3'* eine Regelung - hier eine Lageregelung - durch. Die Steuereinrichtung 12 regelt also die Antriebe für die erste Spindel 4, das erste Werkzeug 1 und die Radialpositionierung des zweiten Werkzeugs 2 (beispielsweise die Antriebe 11a bis 11c) entsprechend dem für den jeweiligen Antrieb 11a bis 11c im Schritt S3 bzw. im Schritt S4 ermittelten aktuellen Lagesollwert z1*, x1*, x2* und die Antriebe für die Axialpositionierung des zweiten Werkzeugs 6 und die Positionierung der zweiten Spindel 10 (beispielsweise die Antriebe 11d bis 11f) entsprechend dem für den jeweiligen Antrieb 11d bis 11f im Schritt S5 ermittelten aktuellen Lagesollwert z2'*, z3'*, x3'*. Gemäß diesem Beispiel sind also die Antriebe 11a bis 11c Leitantriebe, die Antriebe 11d bis 11f Folgeantriebe.

In einem Schritt S7 ermittelt die Steuereinrichtung 12 für jeden Folgeantrieb 11d bis 11f eine Dynamik D, mit welcher der jeweilige Folgeantrieb 11d bis 11f auf Grund der Lageregelung auf den jeweiligen aktuellen Lagesollwert z2'*, z3'*, x3'* angesteuert wird.

In einem Schritt S8 prüft die Steuereinrichtung 12, ob die Dynamik D oberhalb einer (gegebenenfalls antriebsspezifischen) unteren Dynamikgrenze D' liegt. Wenn dies nicht der Fall ist, geht die Steuereinrichtung 12 zu einem Schritt S9 über, in welchem sie das Datenwort DW zurücksetzt.

Anderenfalls prüft die Steuereinrichtung 12 in einem Schritt S10, ob die Dynamik D oberhalb einer (gegebenenfalls antriebsspezifischen) oberen Dynamikgrenze D" liegt. Wenn dies nicht der Fall ist, wird keine weitergehende Maßnahme ergriffen. Wenn dies hingegen der Fall ist, setzt die Steuereinrichtung 12 in einem Schritt S11 das Datenwort DW.

Von jedem der Schritte S9, S10 (im Nein-Zweig) und S11 geht die Steuereinrichtung 12 zum Schritt S2 zurück.

Aus den Schritten S8 bis S11 ist unter anderem ersichtlich, welcher Art die Modifikation des Schrittes S4 ist. Die Modifikation ist derart, dass im Rahmen des Schrittes S4 die Ermittlung der aktuellen Lagesollwerte x1* bis x3*, z1* bis z3* für mindestens eine der Leitachsen derart modifiziert wird, dass der entsprechende Folgeantrieb 11d bis 11f mit einer reduzierten Dynamik D angesteuert wird.

Die Schritte S2 bis S11 werden mit einem vorbestimmten Takt ausgeführt. Im Ergebnis hat die Sequenz der Schritte S2 bis S11 somit zur Folge, dass die Steuereinrichtung 12 in jedem Takt prüft, ob die Dynamik D der Folgeantriebe 11d bis 11f eine obere Dynamikgrenze D" überschreitet. Wenn die obere Dynamikgrenze D" überschritten wird, wird ab dem nächsten Takt die Ermittlung der aktuellen Lagesollwerte x1* bis x3*, z1* bis z3* für mindestens eine der Leitachsen derart modifiziert, dass der betroffene Folgeantrieb 11d bis 11f mit einer reduzierten Dynamik D angesteuert wird. Die modifizierte Ermittlung der aktuellen Lagesollwerte x1* bis x3*, z1* bis z3* wird beibehalten, bis die reduzierte Dynamik D des betroffenen Folgeantriebs 11d bis 11f die untere Dynamikgrenze D' unterschreitet.

Der Takt kann nach Bedarf bestimmt sein. Beispielsweise kann es sich um den Interpolationstakt (in der Regel alle 2 ms) handeln. Alternativ kann ein Reglertakt verwendet werden, beispielsweise der Lagereglertakt (in der Regel jede Millisekunde), der Drehzahlreglertakt (in der Regel alle 125 $\mu$s) oder der Stromreglertakt (in der Regel ebenfalls alle 125 $\mu$s).

Im Prinzip ist es möglich, die Ermittlung der aktuellen Lagesollwerte x1* bis x3*, z1* bis z3* einheitlich zu modifizieren. Im Prinzip ist es ebenfalls möglich, in gegenseitiger Abhängigkeit der Lagesollwerte x1* bis x3*, z1* bis z3* der Leitachsen zu entscheiden, welche der aktuellen Lagesollwerte x1* bis x3*, z1* bis z3* auf modifizierte Weise ermittelt werden sollen. Bevorzugt ist jedoch, dass die Steuereinrichtung 12 in dem Fall, dass die Dynamik D, mit welcher der betroffene Folgeantrieb 11d bis 11f angesteuert wird, die obere Dynamikgrenze D" überschreitet, für jede der Leitachsen unabhängig von den anderen Leitachsen entscheidet, ob und gegebenenfalls in welchem Umfang sie die Ermittlung der aktuellen Lagesollwerte x1* bis x3*, z1* bis z3* für die jeweilige Leitachse modifiziert. Dies wird nachfolgend in Verbindung mit FIG 8 näher erläutert. FIG 8 zeigt im Ergebnis eine mögliche Ausgestaltung des Schrittes S4 von FIG 7.

Gemäß FIG 8 selektiert die Steuereinrichtung 12 in einem Schritt S21 eine der Leitachsen, welche zu dem aktuellen Lagesollwert z2'*, z3'*, x3'* des betroffenen Folgeantriebs 11d bis 11f beitragen. In einem Schritt S22 ermittelt die Steuereinrichtung 12 den Wert einer logischen Variable MOD. Die logische Variable MOD nimmt den Wert WAHR dann und nur dann an, wenn eine für die selektierte Leitachse spezifische Bedingung erfüllt ist. Anderenfalls nimmt die logische Variable MOD den Wert UNWAHR an.

Der Wert der logischen Variablen MOD wird in einem Schritt S23 überprüft. Je nach Ergebnis der Überprüfung des Schrittes S23 wird alternativ ein Schritt S24 oder ein Schritt S25 ausgeführt. Im Schritt S24 erfolgt eine unmodifizierte Ermittlung des aktuellen Lagesollwerts x1* bis x3*, z1* bis z3* für die selektierte Leitachse. Im Schritt S25 erfolgt eine modifizierte Ermittlung des betreffenden aktuellen Lagesollwerts x1* bis x3*, z1* bis z3*. Die Schritte S24 und S25 korrespondieren somit in Bezug auf die selektierte Leitachse mit den Schritten S3 und S4 von FIG 7.

In einem Schritt S26 prüft die Steuereinrichtung 12, ob sie bereits alle Leitachsen behandelt hat, deren aktuelle Lagesollwerte x1* bis x3*, z1* bis z3* zum aktuellen Lagesollwert z2'*, z3'*, x3'* des betroffenen Folgeantriebs 11d bis 11f beitragen. Wenn dies nicht der Fall ist, geht die Steuereinrichtung zu einem Schritt S27 über. Im Schritt S27 selektiert die Steuereinrichtung 12 eine andere betroffene Leitachse. Sodann geht sie zum Schritt S22 zurück. Anderenfalls ist das Verfahren von FIG 8 beendet.

In Verbindung mit den FIG 9 und 10 wird nachstehend eine mögliche Ausgestaltung der leitachsenspezifischen Bedingung näher erläutert.

Das im Schritt S9 zurückgesetzte, im Schritt S11 gesetzte und im Schritt S2 überprüfte Datenwort DW kann pro Dynamikkategorie (Lage, Geschwindigkeit, Beschleunigung, Ruck, Kraft, Moment, ...) im einfachsten Fall ein Flag sein, das nur zwei Zustände annehmen kann, nämlich "gesetzt" und "nicht gesetzt". Vorzugsweise ist das Datenwort DW jedoch gemäß FIG 9 detaillierter aufgeschlüsselt. Insbesondere kann das Datenwort DW gemäß FIG 9 pro Leitachse - gegebenenfalls für jede Dynamikkategorie - zusätzlich eine Information 17 - nachfolgend Vorzeicheninformation 17 genannt - umfassen. Die Vorzeicheninformation 17 gibt an, welches Vorzeichen der betrachteten Dynamikkategorie kritisch ist. Bei einer Bewegung kann die Vorzeicheninformation 17 beispielsweise angeben, ob eine Vorwärts- oder Rückwärtsbewegung der jeweiligen Leitachse kritisch ist. In diesem Fall kann der Schritt S22 von FIG 8 entsprechend FIG 10 beispielsweise derart ausgestaltet sein, dass die logische Variable MOD nur dann den Wert WAHR annimmt, wenn ein durch die jeweilige Leitachse bewirkter Anteil an der Dynamik D des betroffenen Folgeantriebs 11d bis 11f und die betreffende Dynamik D insgesamt dasselbe Vorzeichen aufweisen. Andernfalls nimmt die logische Variable MOD den Wert UNWAHR an.

Ein Beispiel zur Veranschaulichung: Man nehme an, der Folgeantrieb 11d für die Axialpositionierung z2 des zweiten Werkzeugs 6 von FIG 4 bewege sich mit einer Geschwindigkeit v2 nach links, welche die obere Dynamikgrenze D" überschreitet. Es gelte also |v2| > D" und sign v2 = +1.

In diesem Fall ist eine Axialpositionierung der ersten Spindel 4 nach rechts unkritisch, weil diese Bewegung, welche in Bezug auf die Axialpositionierung der ersten Spindel 4 in die positive Richtung geht, negativ in die Axialpositionierung des zweiten Werkzeugs 6 eingeht. Ein Reduzieren einer Geschwindigkeit v1 für die erste Spindel 4 ist in diesem Fall nicht erforderlich. Wird die erste Spindel 4 hingegen nach links bewegt, kann ein Reduzieren der Geschwindigkeit v1, mit der diese Bewegung erfolgt, sinnvoll sein.

Gegebenenfalls kann das Datenwort DW gemäß FIG 9 für jede Leitachse zusätzlich zur Vorzeicheninformation 17 eine weitere Information 18 umfassen, nachfolgend Übersetzungsinformation genannt. In diesem Fall kann der Schritt S22 von FIG 8 beispielsweise entsprechend FIG 11 ausgestaltet sein. Gemäß FIG 11 berücksichtigt die Steuereinrichtung 12 bei der Ermittlung der logischen Variablen MOD zusätzlich zur Vorzeicheninformation 17 auch die Übersetzungsinformation 18. Beispielsweise kann ein Modifizieren bei der Ermittlung der aktuellen Lagesollwerte x1* bis x3*, z1* bis z3* für die betroffene Leitachse nur dann vorgenommen werden, wenn ein durch die Übersetzungsinformation 18 vorgegebenes Übersetzungsverhältnis einen Schwellenwert übersteigt. Alternativ kann die Übersetzungsinformation 18 ein Flag sein, das in Abhängigkeit vom Übersetzungsverhältnis gesetzt wird. Das Übersetzungsverhältnis ergibt sich durch den Quotienten der Änderung der betreffenden Lagesollwerte z2'*, z3'*, x3'*, welche durch eine Änderung der Lagesollwerte x1* bis x3*, z1* bis z3* der betreffenden Leitachse bewirkt wird.

In der Regel sind der Steuereinrichtung 12 nicht nur die Verläufe als solche (siehe beispielhaft die Bahnen der FIG 2, 3 und 5) vorgegeben, sondern zusätzlich auch Maximalgeschwindigkeiten vM mit denen die Leitachsen maximal verfahren werden sollen. In FIG 12 ist beispielhaft ein Verlauf der Maximalgeschwindigkeit vM für eine der Bahnen als Funktion des betreffenden Verfahrweges s1 bis s3 dargestellt. Aus FIG 12 ist insbesondere ersichtlich, dass die Maximalgeschwindigkeit vM nicht notwendigerweise konstant sein muss, sondern variieren kann. Im Falle der Variierung kann der Wert der Maximalgeschwindigkeit vM einen funktionalen Verlauf aufweisen oder abschnittweise konstant sein.

Prinzipiell gleichartige Verläufe können auch für die Beschleunigung und/oder die Kraft bzw. das Moment, gegebenenfalls auch für den Ruck, vorgegeben werden. Im Rahmen der vorliegenden Erfindung kommt es jedoch insbesondere auf die Maximalgeschwindigkeit vM an. Denn prinzipiell kann bezüglich der Produktionsmaschine zwischen zwei Arten von Bewegungen unterschieden werden. Die erste Art von Bewegungen sind reine Positionierungen, also Verfahrbewegungen, während derer keine Bearbeitung des jeweiligen Werkstücks 2, 7 durch das jeweilige Werkzeug 1, 6, 8 erfolgt. Derartige Bewegungen erfolgen in der Regel in einem sogenannten Eilgang, also mit hoher Geschwindigkeit. Bearbeitungsvorgänge hingegen, also die andere Art von Bewegungen, erfolgen in der Regel mit erheblich geringeren Geschwindigkeiten. Es ist daher möglich, den Schritt S22 von FIG 8 entsprechend FIG 13 derart auszugestalten, dass die logische Variable MOD den Wert WAHR annimmt, wenn die Maximalgeschwindigkeit vM, mit der die der jeweiligen Leitachse zugeordnete Bahn (gegebenenfalls lokal an dieser Stelle der Bahn) maximal abgefahren werden soll, oberhalb eines geeignet gewählten Schwellenwertes SW liegt. Diese Ausgestaltung ist alternativ oder zusätzlich zu einer Berücksichtigung der Vorzeicheninformation 17 (sei es mit, sei es ohne Berücksichtigung der Übersetzungsinformation 18) möglich.

Alternativ oder zusätzlich sind auch andere Arten der Ermittlung der logischen Variablen MOD möglich. So ist es beispielsweise gemäß FIG 14 möglich, dass für jede Bahn abschnittweise vorgegeben ist, welchen Typ der momentane Bewegungsvorgang aufweist. Beispielsweise kann eine Einteilung in die Typen

1 = Eilgang,
2 = Grobbearbeitung (beispielsweise Schruppen),
3 = Feinbearbeitung (beispielsweise Schlichten) und
4 = Endbearbeitung (beispielsweise Polieren)

erfolgen. In einem derartigen Fall sollte das Datenwort DW zumindest für die Dynamikkategorie "Geschwindigkeit" eine entsprechende Abstufung ermöglichen, also ebenfalls entsprechend den oben genannten Typen einen Wertebereich von 1 bis 5 aufweisen. In diesem Fall kann der Schritt S22 von FIG 8 entsprechend FIG 15 derart ausgestaltet sein, dass die logische Variable MOD den Wert WAHR in Abhängigkeit davon annimmt, ob der momentane Typ der jeweiligen Bearbeitung größer als die für den betreffenden Folgeantrieb 11d bis 11f ermittelte Stufe (1 = kein Problem, 2 = reduziere Eilgangbewegungen, 3 = reduziere Grobbearbeitungen, ...) ist. Beispielsweise kann zunächst nur eine Reduzierung von Eilgangbewegungen angefordert werden. Nur wenn sich dies als nicht ausreichend erweist, werden auch Grobbearbeitungen reduziert usw. Auch diese Ausgestaltung ist mit den Ausgestaltungen der FIG 9 bis 13 kombinierbar.

Schließlich kann es geschehen, dass während des Betriebs der Produktionsmaschine kritische Betriebszustände auftreten, welche es aus übergeordneten Gründen verbieten, eine entsprechende Dynamik eines Leitantriebs 11a bis 11c oder eines Folgeantriebs 11d bis 11f zu reduzieren. Beispielsweise kann es erforderlich sein, ein Werkzeug 1, 6, 8 rasch aus seiner Bearbeitungslage, bei welcher es am Werkstück 2, 7 anliegt, zu entfernen. Vorzugsweise umfasst der Schritt S22 von FIG 8 daher entsprechend FIG 16 auch eine Abfrage, ob ein derartiger kritischer Betriebszustand vorliegt. Der Steuereinrichtung 12 werden - siehe FIG 6 - während des Regelns der Antriebe 11a bis 11f Informationen 19 zugeführt, nachfolgend Zustandsinformationen 19 genannt. Anhand der ihr zugeführten Zustandsinformationen ermittelt die Steuereinrichtung 12, ob ein kritischer Zustand mindestens einer Leitachse oder mindestens eines Antriebs 11a bis 11f vorliegt. Die Frage, ob ein kritischer Zustand mindestens einer Leitachse oder mindestens eines Antriebs 11a bis 11f vorliegt, wird von der Steuereinrichtung 12 bei der Entscheidung, ob und in welchem Umfang sie die Ermittlung der aktuellen Lagesollwerte x1* bis x3*, z1* bis z3* für die Leitachsen modifiziert, mit berücksichtigt.

Im einfachsten Fall ist durch die zugeführten Informationen 19 direkt und unmittelbar bestimmt, ob ein kritischer Zustand vorliegt. Beispielsweise kann ein entsprechendes Kommando vorgegeben sein. Alternativ kann die Steuereinrichtung 12 die vorgegebenen Informationen 19 miteinander verknüpfen.

Es ist möglich, dass die obenstehend erläuterten Vorgehensweisen stets und unbedingt ausgeführt werden. Alternativ ist es möglich, sie auf Grund einer entsprechenden Parametrierung einzeln oder gruppenweise freizugeben oder zu sperren. Auch kann durch programmierte Zuordnung Teilen von bestimmten Bearbeitungsvorgängen vorab fest ein bestimmter Dynamikanteil zugeordnet werden.

Die vorliegende Erfindung weist viele Vorteile auf. Insbesondere kann im Regelfall mit voller Dynamik D der Folgeantriebe 11d bis 11f gearbeitet werden. Ein Reduzieren der Dynamik D der Folgeantriebe 11d bis 11f ist nur im Einzelfall und so wenig wie möglich erforderlich. Dennoch wird eine insbesondere qualitätsoptimierte Bearbeitung ermöglicht.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

**1.** Betriebsverfahren für eine Steuereinrichtung (12),

- wobei der Steuereinrichtung (12) für eine Anzahl von Leitachsen jeweils ein Verlauf von Sollwerten (x1* bis x3*, z1* bis z3*) vorgegeben ist,
- wobei die Steuereinrichtung (12) mit einem vorbestimmten Takt für jede Leitachse jeweils einen aktuellen Sollwert (x1* bis x3*, z1* bis z3*) ermittelt und anhand einer Verknüpfungsvorschrift einen aktuellen Sollwert (z2'*,z3'*, x3'*) für eine Folgeachse ermittelt,
- wobei in die Verknüpfungsvorschrift mindestens ein aktueller Sollwert (x1* bis x3*, z1* bis z3*) einer der Leitachsen sowie mindestens ein Soll- oder Istwert eines weiteren Antriebs (11a bis 11c) eingeht,
- wobei die Steuereinrichtung (12) mit dem vorbestimmten Takt einen Antrieb (11d bis 11f) gemäß dem jeweils aktuellen Sollwert (z2'*, z3'*, x3'*) der Folgeachse regelt, **dadurch gekennzeichnet, dass**
- die Steuereinrichtung (12) in jedem Takt prüft, ob eine Dynamik (D), mit welcher der Antrieb (11d bis 11f) auf Grund des Regelns auf den aktuellen Sollwert (z2'*, z3'*, x3'*) der Folgeachse angesteuert wird, eine obere Dynamikgrenze (D") überschreitet,

- die Steuereinrichtung (12) in dem Fall, dass die Dynamik (D), mit welcher der Antrieb (11d bis 11f) angesteuert wird, die obere Dynamikgrenze (D") überschreitet, ab dem nächsten Takt die Ermittlung der aktuellen Sollwerte (x1* bis x3*, z1* bis z3*) für mindestens eine der Leitachsen derart modifiziert, dass der Antrieb (11d bis 11f) mit einer reduzierten Dynamik (D) angesteuert wird, bis die reduzierte Dynamik (D), mit welcher der Antrieb (11d bis 11f) angesteuert wird, eine untere Dynamikgrenze (D') unterschreitet.

2. Betriebsverfahren nach Anspruch 1, **dadurch gekennzeichnet, dass** die Steuereinrichtung (12) in dem Fall, dass die Dynamik (D), mit welcher der Antrieb (11d bis 11f) angesteuert wird, die obere Dynamikgrenze (D") überschreitet, für jede der Leitachsen unabhängig von den anderen Leitachsen entscheidet, ob und ggf. in welchem Umfang sie die Ermittlung der aktuellen Sollwerte (x1* bis x3*, z1* bis z3*) für diese Leitachse modifiziert.

3. Betriebsverfahren nach Anspruch 2, **dadurch gekennzeichnet, dass** die Steuereinrichtung (12) in dem Fall, dass die Dynamik (D), mit welcher der Antrieb (11d bis 11f) angesteuert wird, die obere Dynamikgrenze (D") überschreitet, die Ermittlung der aktuellen Sollwerte (x1* bis x3*, z1* bis z3*) für die jeweilige Leitachse nur dann modifiziert, wenn ein durch die jeweilige Leitachse bewirkter Anteil an der Dynamik (D), mit welcher der Antrieb (11d bis 11f) angesteuert wird, und die Dynamik (D), mit welcher der Antrieb (11d bis 11f) angesteuert wird, dasselbe Vorzeichen aufweisen.

4. Betriebsverfahren nach Anspruch 3, **dadurch gekennzeichnet, dass** die Steuereinrichtung (12) in dem Fall, dass die Dynamik (D), mit welcher der Antrieb (11d bis 11f) angesteuert wird, die obere Dynamikgrenze (D") überschreitet, die Ermittlung der aktuellen Sollwerte (x1* bis x3*, z1* bis z3*) für die jeweilige Leitachse in Abhängigkeit von einem Übersetzungsverhältnis (18) modifiziert, mit dem eine Änderung der Sollwerte (x1* bis x3*, z1* bis z3*) für diese Leitachse eine Änderung der Sollwerte (z2'*, z3'*, x3'*) für die Folgeachse bewirkt.

5. Betriebsverfahren nach einem der Ansprüche 2 bis 4, **dadurch gekennzeichnet,**

- **dass** der Steuereinrichtung (12) zusätzlich zu den Verläufen auch Maximalgeschwindigkeiten (vM) vorgegeben sind, mit denen die Leitachsen maximal verfahren werden sollen, und
- **dass** die Steuereinrichtung (12) für jede Leitachse bei der Entscheidung, ob und ggf. in welchem Umfang sie die Ermittlung der aktuellen Sollwerte (x1* bis x3*, z1* bis z3*) für diese Leitachse modifiziert, die jeweilige Maximalgeschwindigkeit (vM) berücksichtigt.

6. Betriebsverfahren nach einem der Ansprüche 2 bis 5, **dadurch gekennzeichnet,**

- **dass** der Steuereinrichtung (12) zusätzlich zu den Verläufen auch Typen vorgegeben sind und
- **dass** die Steuereinrichtung (12) für jede Leitachse bei der Entscheidung, ob und ggf. in welchem Umfang sie die Ermittlung der aktuellen Sollwerte (x1* bis x3*, z1* bis z3*) für diese Leitachse modifiziert, den jeweiligen Typ berücksichtigt.

7. Betriebsverfahren nach einem der Ansprüche 2 bis 6, **dadurch gekennzeichnet,**

- **dass** der Steuereinrichtung während des Regelns des Antriebs (11d bis 11f) Informationen (19) zugeführt werden,
- **dass** die Steuereinrichtung (12) anhand der ihr zugeführten Informationen (19) ermittelt, ob ein kritischer Zustand mindestens einer Leitachse oder mindestens eines Antriebs (11a bis 11f) vorliegt, und
- **dass** die Steuereinrichtung (12) bei der Entscheidung, ob und ggf. in welchem Umfang sie die Ermittlung der aktuellen Sollwerte (x1* bis x3*, z1* bis z3*) für die Leitachsen modifiziert, mit berücksichtigt, ob ein kritischer Zustand mindestens einer Leitachse oder mindestens eines Antriebs (11a bis 11f) vorliegt.

8. Betriebsverfahren nach einem der obigen Ansprüche, **dadurch gekennzeichnet, dass** die Sollwerte Lagesollwerte (x1* bis x3*, z1* bis z3*, z2'*, z3'*, x3'*), eine zeitliche Ableitung von Lagesollwerten (x1* bis x3*, z1* bis z3*, z2'*, z3'*, x3'*), Moment- oder Kraftsollwerte sind.

9. Betriebsverfahren nach einem der obigen Ansprüche, **dadurch gekennzeichnet, dass** die Sollwerte miteinander korrespondieren.

10. Betriebsprogramm, das Maschinencode (14) aufweist, der von einer Steuereinrichtung (12) unmittelbar abarbeitbar ist und dessen Abarbeitung durch die Steuereinrichtung (12) bewirkt, dass die Steuereinrichtung (12) ein Betriebsverfahren nach einem der obigen Ansprüche ausführt.

**11.** Datenträger, auf dem in maschinenlesbarer Form ein Betriebsprogramm (13) nach Anspruch 10 gespeichert ist.

**12.** Steuereinrichtung zum Regeln eines Antriebs (11d bis 11f), wobei die Steuereinrichtung (12) derart ausgestaltet ist, dass sie im Betrieb ein Betriebsverfahren nach einem der Ansprüche 1 bis 9 ausführt.

**13.** Produktionsmaschine,

- wobei die Produktionsmaschine einen geregelten Antrieb (11d bis 11f) aufweist,
- wobei die Produktionsmaschine eine Steuereinrichtung (12) aufweist, die gemäß Anspruch 12 ausgebildet ist.

**Claims**

**1.** Operating method for a control device (12),

- in which the control device (12) is respectively prescribed for a number of master axes a profile of desired values (x1* to x3*, z1* to z3*),
- in which the control device (12) respectively determines a current desired value (x1* to x3*, z1* to z3*) with the aid of a predetermined clock pulse for each master axis and determines a current desired value (z2'*, z3'*, x3'*) for a master axis with the aid of a logic combination rule,
- in which at least one current desired value (x1* to x3*, z1* to z3*) of one of the master axes, and at least one desired or actual value of a further drive (11a to 11c) feature in the logic combination rule,
- in which the control device (12) controls a drive (11d to 11f) in accordance with the respectively current desired value (z2'*, z3'*, x3'*) of the slave axis with the aid of the predetermined clock pulse,
- **characterized in that** the control device (12) checks in each clock pulse whether a dynamics (D) with which the drive (11d to 11f) is activated to the current desired value (z2'*, z3'*, x3'*) of the slave axis on the basis of the control overshoots an upper dynamics limit (D"),
- in the case when the dynamics (D) with which the drive (11d to 11f) is activated overshoots the upper dynamics limit (D"), the control device (12) modifies the determination of the current desired values (x1* to x3*, z1* to z3*) for at least one of the master axes, doing so starting from the next clock pulse and in such a way that the drive (11d to 11f) is activated with a reduced dynamics (D) until the reduced dynamics (D) with which the drive (11d to 11f) is activated undershoots a lower dynamics limit (D').

**2.** Operating method according to Claim 1, **characterized in that** in the case when the dynamics (D) with which the drive (11d to 11f) is activated overshoots the upper dynamics limit (D"), the control device (12) decides for each of the master axes independently of the other master axes whether and, if appropriate, to what extent it modifies the determination of the current desired values (x1* to x3*, z1* to z3*) for this master axis.

**3.** Operating method according to Claim 2, **characterized in that** in the case when the dynamics (D) with which the drive (11d to 11f) is activated overshoots the upper dynamics limit (D"), the control device (12) modifies the determination of the current desired values (x1* to x3*, z1* to z3*) for the respective master axis only whenever a component of the dynamics (D) which is effected by the respective master axis and with which the drive (11d to 11f) is driven, and the dynamics (D) with which the drive (11d to 11f) is driven have the same sign.

**4.** Operating method according to Claim 3, **characterized in that** in the case when the dynamics (D) with which the drive (11d to 11f) is activated overshoots the upper dynamics limit (D"), the control device (12) modifies the determination of the current desired values (x1* to x3*, z1* to z3*) for the respective master axis as a function of a transformation ratio (18) with the aid of which a change in the desired values (x1* to x3*, z1* to z3*) for this master axis effects a change in the desired values (z2'*, z3'*, x3'*) for the slave axis.

**5.** Operating method according to one of Claims 2 to 4, **characterized**

- **in that** in addition to the profiles, the control device (12) is also prescribed maximum speeds (vM) at which the master axes are to experience maximum movement, and
- **in that** for each master axis the control device (12) takes account of the respective maximum speed (vM) when deciding whether and, if appropriate, to what extent it modifies the determination of the current desired values (x1* to x3*, z1* to z3*) for this master axis.

**6.** Operating method according to one of Claims 2 to 5, **characterized**

- **in that** in addition to the profiles, the control device (12) is also prescribed types, and
- **in that** for each master axis the control device (12) takes account of the respective type when deciding whether and, if appropriate, to what extent it modifies the determination of the current desired values (x1* to x3*, z1* to z3*) for this master axis.

**7.** Operating method according to one of Claims 2 to 6, **characterized**

- **in that** while controlling the drive (11d to 11f) the control device is fed information (19),
- **in that** the control device (12) uses the information (19) fed to it to determine whether a critical state of at least one master axis or at least one drive (11a to 11f) obtains, and
- **in that** when deciding whether and, if appropriate, to what extent it modifies the determination of the current desired values (x1* to x3*, z1* to z3*) for the master axes the control device (12) also takes account of whether a critical state of at least one master axis or at least one drive (11a to 11f) obtains.

**8.** Operating method according to one of the above claims, **characterized in that** the desired values are desired position values (x1* to x3*, z1* to z3*, z2'*, z3'*, x3'*), a time derivative of desired position values (x1* to x3*, z1* to z3*, z2'*, z3'*, x3'*), desired torque values or desired force values.

**9.** Operating method according to one of the above claims, **characterized in that** the desired values correspond to one another.

**10.** Operating program that has machine code (14) which can be executed directly by a control device (12) and whose execution by the control device (12) has the effect that the control device (12) carries out an operating method according to one of the above claims.

**11.** Data medium on which an operating program (13) according to Claim 10 is stored in machine-readable form.

**12.** Control device for controlling a drive (11d to 11f), in which the control device (12) is configured in such a way that during operation it carries out an operating method according to one of Claims 1 to 9.

**13.** Production machine,

- in which the production machine has a controlled drive (11d to 11f), and
- in which the production machine has a control device (12) that is designed according to Claim 12.

**Revendications**

**1.** Procédé pour faire fonctionner un dispositif ( 12 ) de commande

- dans lequel on prescrit au dispositif ( 12 ) de commande pour un certain nombre d'axes directeurs respectivement une courbe de valeurs ( x1* à x3*, z1* à z3* ) de consigne,
- dans lequel le dispositif ( 12 ) de commande détermine à une cadence déterminée à l'avance pour chaque axe directeur respectivement une valeur ( x1* à x3*, z1* à z3* ) de consigne présente et détermine, au moyen d'une prescription de combinaison, une valeur ( z2'*, z3'*, x3'* ) de consigne présente pour un axe asservi,
- dans lequel entrent dans la prescription de combinaison au moins une valeur ( x1* à x3*, z1* à z3* ) de consigne présente de l'un des axes directeurs ainsi qu'au moins une valeur de consigne ou une valeur réelle d'un autre entraînement ( 11a à 11c ),
- dans lequel le dispositif ( 12 ) de commande régule à la cadence donnée à l'avance un entraînement ( 11d à 11f ) suivant la valeur ( z2'*, z3'*, x3'* ) de consignes présente respective de l'axe asservi,

**caractérisé en ce que**

- le dispositif ( 12 ) de commande contrôle dans chaque cadence si une dynamique ( D ), avec laquelle l'entraînement ( 11d à 11f ) est commandé sur la base de la régulation à la valeur ( z2'*, z3'*, x3'* ) de consigne présente de l'axe asservi, dépasse une limite ( D" ) dynamique supérieure,
- le dispositif ( 12 ) de commande, dans le cas où la dynamique ( D ) avec laquelle l'entraînement ( 11d à 11f ) est commandé dépasse la limite ( D" ) dynamique supérieure, modifie, à partir de la cadence immédiatement suivante, la détermination des valeurs ( x1* à x3*, z1* à z3* ) de consignes présente pour au moins l'un des axes directeurs de manière à ce que l'entraînement ( 11d à 11f ) soit commandé avec une dynamique ( D ) réduite jusqu'à ce que la dynamique ( D ) réduite, avec laquelle l'entraînement ( 11d à 11f ) est commandé, devienne inférieure à une limite ( D') dynamique inférieure.

**2.** Procédé suivant la revendication 1, **caractérisé en ce que** le dispositif ( 12 ) de commande, dans le cas où la dynamique ( D ) avec laquelle l'entraînement ( 11d à 11f ) est commandé dépasse la limite ( D" ) dynamique supérieure, décide, pour chacun des axes directeurs indépendamment des autres axes directeurs, si et éventuellement dans quelle mesure il modifie pour cet axe directeur la détermination des valeurs ( x1* à x3*, z1* à z3* ) de consigne présentes.

**3.** Procédé suivant la revendication 2, **caractérisé en ce que** le dispositif ( 12 ) de commande dans le cas où la dynamique ( D ) avec laquelle l'entraînement ( 11d à 11f ) est commandé, dépasse la limite ( D" ) dynamique supérieure, ne modifie la détermination des valeurs ( x1* à x3*, z1* à z3* ) de consigne présentes pour l'axe directeur respectif que si une proportion, provoquée par l'axe directeur respectif, de la dynamique ( D ) avec laquelle l'entraînement ( 11d à 11f ) est commandé et la dynamique ( D ) avec laquelle l'entraînement ( 11d à 11f ) est commandé ont le même signe.

**4.** Procédé suivant la revendication 3, **caractérisé en ce que** le dispositif ( 12 ) de commande, dans le cas où la dynamique ( D ) avec laquelle l'entraînement ( 11d à 11f ) est commandé dépasse la limite ( D" ) dynamique supérieure, modifie la détermination des valeurs ( x1* à x3*, z1* à z3* ) de consigne présentes pour l'axe directeur respectif en fonction d'un rapport ( 18 ) de démultiplication par lequel une modification des valeurs ( x1* à x3*, z1* à z3* ) de consigne pour cet axe directeur provoque une modification des valeurs ( z2'*, z3'*, x3'* ) de consigne pour l'axe asservi.

**5.** Procédé suivant l'une des revendications 1 à 4, **caractérisé**

- **en ce qu'**il est prescrit au dispositif ( 12 ) de consigne en plus des courbes également des vitesses ( vM ) maximum auxquelles les axes directeurs doivent être déplacés au maximum et
- **en ce que** le dispositif ( 12 ) de commande tient compte de la vitesse ( vM ) maximum respective pour chaque axe directeur lors de la décision sur le point de savoir s'il modifie et dans quelle mesure il modifie la détermination des valeurs ( x1* à x3*, z1* à z3* ) de consigne présentes pour cet axe directeur.

**6.** procédé suivant l'une des revendications 2 à 5, **caractérisé**

- **en ce qu'**il est prescrit au dispositif ( 12 ) de commande supplémentairement aux courbes également des types et,
- **en ce que** le dispositif ( 12 ) de commande tient compte du type respectif pour chaque axe directeur lors de la décision sur le point de savoir s'il modifie et dans quelle mesure il modifie la détermination des valeurs ( x1* à x3*, z1* à z3* ) de consigne présentes pour cet axe directeur.

**7.** Procédé suivant l'une des revendications 2 à 6, **caractérisé**

- **en ce qu'**il est envoyé des informations ( 19 ) au dispositif de commande pendant la régulation de l'entraînement ( 11d à 11f ),
- **en ce que** le dispositif ( 12 ) de commande détermine au moyen des informations ( 19 ) qui lui sont envoyées s'il y a un état critique d'au moins un axe directeur ou d'au moins un entraînement ( 11a à 11f ), et
- **en ce que** dispositif ( 12 ) de commande tient compte, lors de la décision sur le point de savoir s'il modifie et dans quelle mesure il modifie la détermination des valeurs ( x1* à x3*, z1* à z3*) de consigne présentes pour les axes directeurs, du point de savoir s'il y a un état critique d'au moins un axe directeur ou d'au moins un entraînement ( 11a à 11f ).

**8.** Procédé suivant l'une des revendications précédentes, **caractérisé en ce que** les valeurs de consigne sont des valeurs ( x1* à x3*, z1* à z3*, z2'*, z3'*, x3'* ) de consigne de position, une dérivée en fonction du temps des valeurs ( x1* à x3*, z1* à z3*, z2'*, z3'*, x3'* ) de consigne de position, des valeurs de consigne de couple ou des valeurs de consigne de force.

**9.** Procédé suivant l'une des revendications précédentes, **caractérisé en ce que** les valeurs de consigne se correspondent mutuellement.

**10.** Programme de fonctionnement qui comporte un code machine ( 14 ) qui peut être élaboré directement par un dispositif ( 12 ) de commande et dont l'élaboration par le dispositif ( 12 ) de commande fait que le dispositif ( 12 ) de commande exécute un procédé suivant l'une des revendications précédentes.

**11.** Support de données sur lequel un programme ( 13 ) de fonctionnement suivant la revendication 10 est mémorisé sous une forme pouvant être lu par une machine.

**12.** Dispositif de commande pour la régulation d'un entraînement ( 11d à 11f ) dans lequel le dispositif ( 12 ) de commande est tel qu'il exécute en fonctionnement un procédé suivant l'une des revendications 1 à 9.

**13.** Machine de production,

- la machine de production a un entraînement ( 11d à 11f ) régulé,
- la machine de production a un dispositif ( 12 ) de commande qui est constitué suivant la revendication 12.

FIG 1

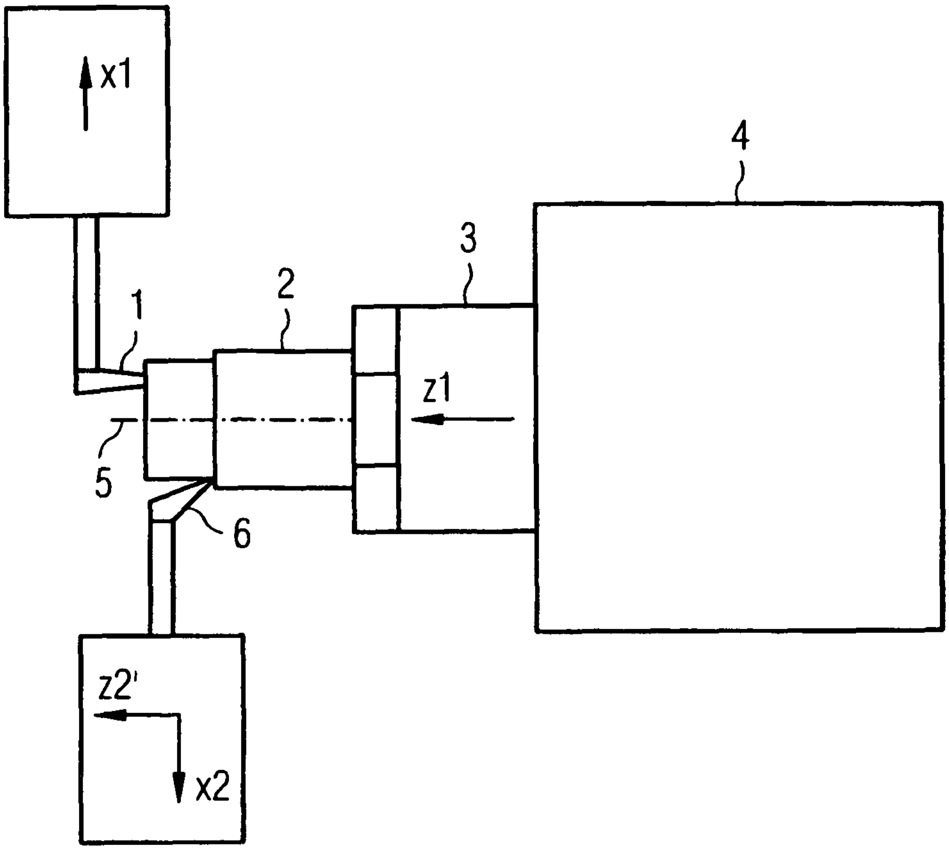


FIG 2

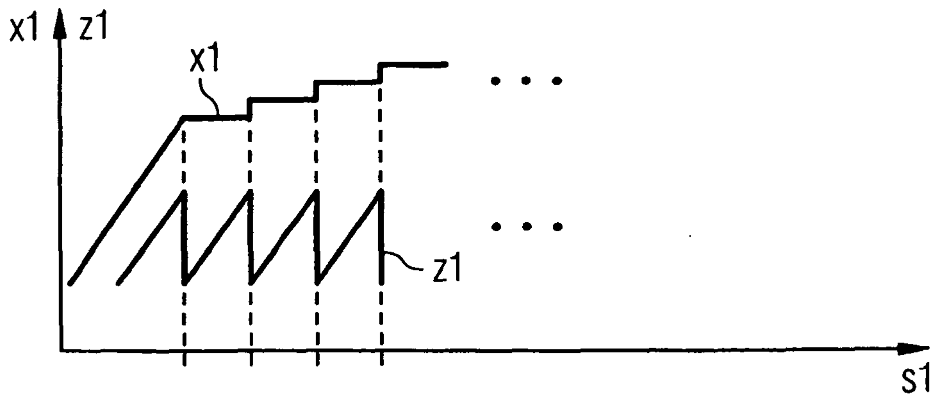

FIG 3

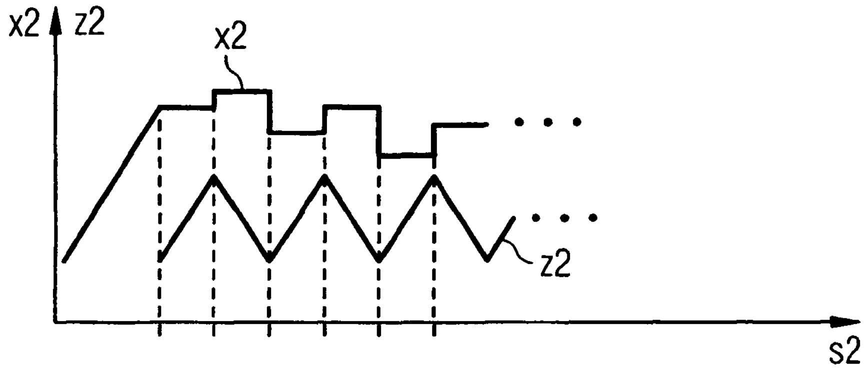


FIG 4

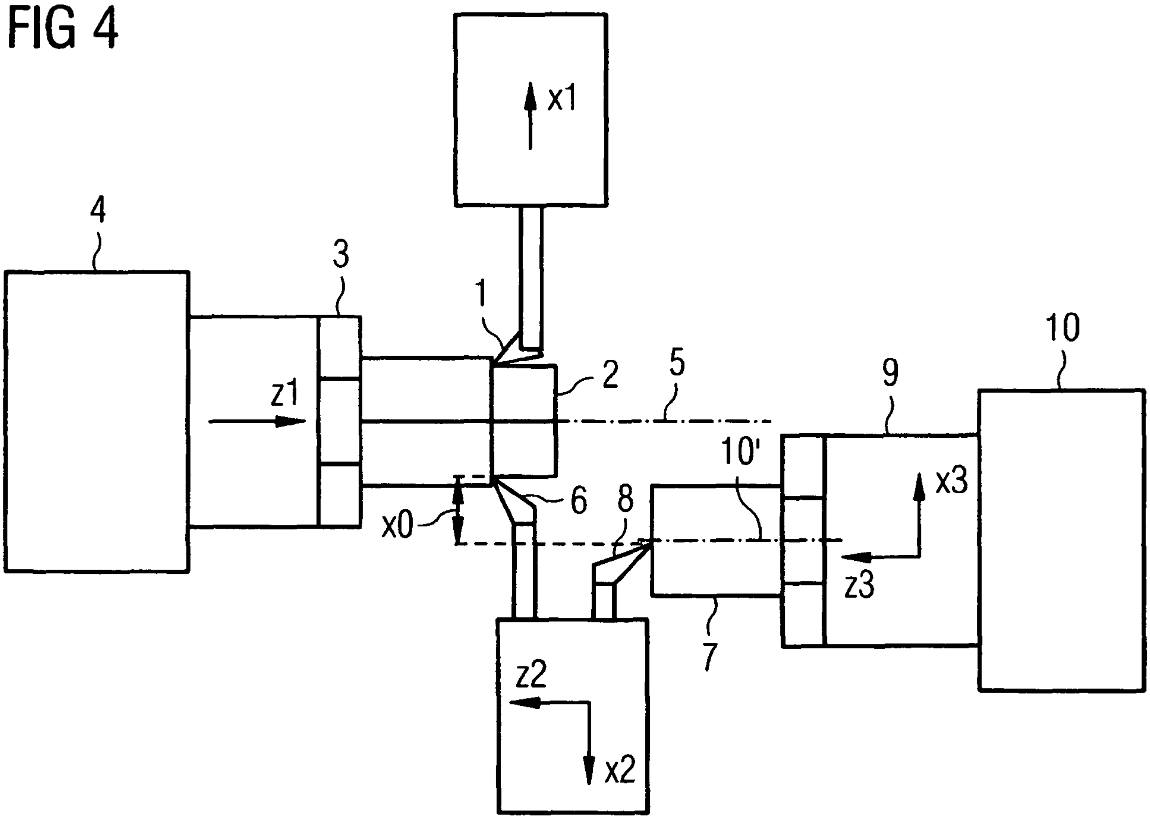

FIG 5

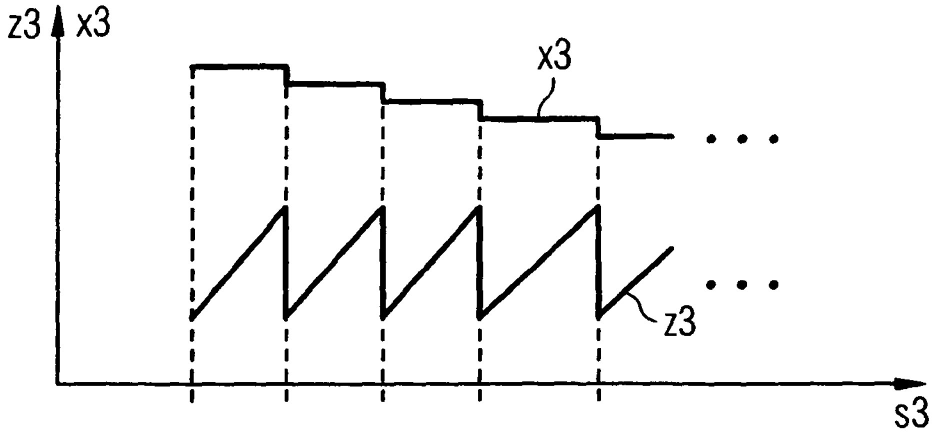
z3
x3
x3
z3
s3

FIG 6

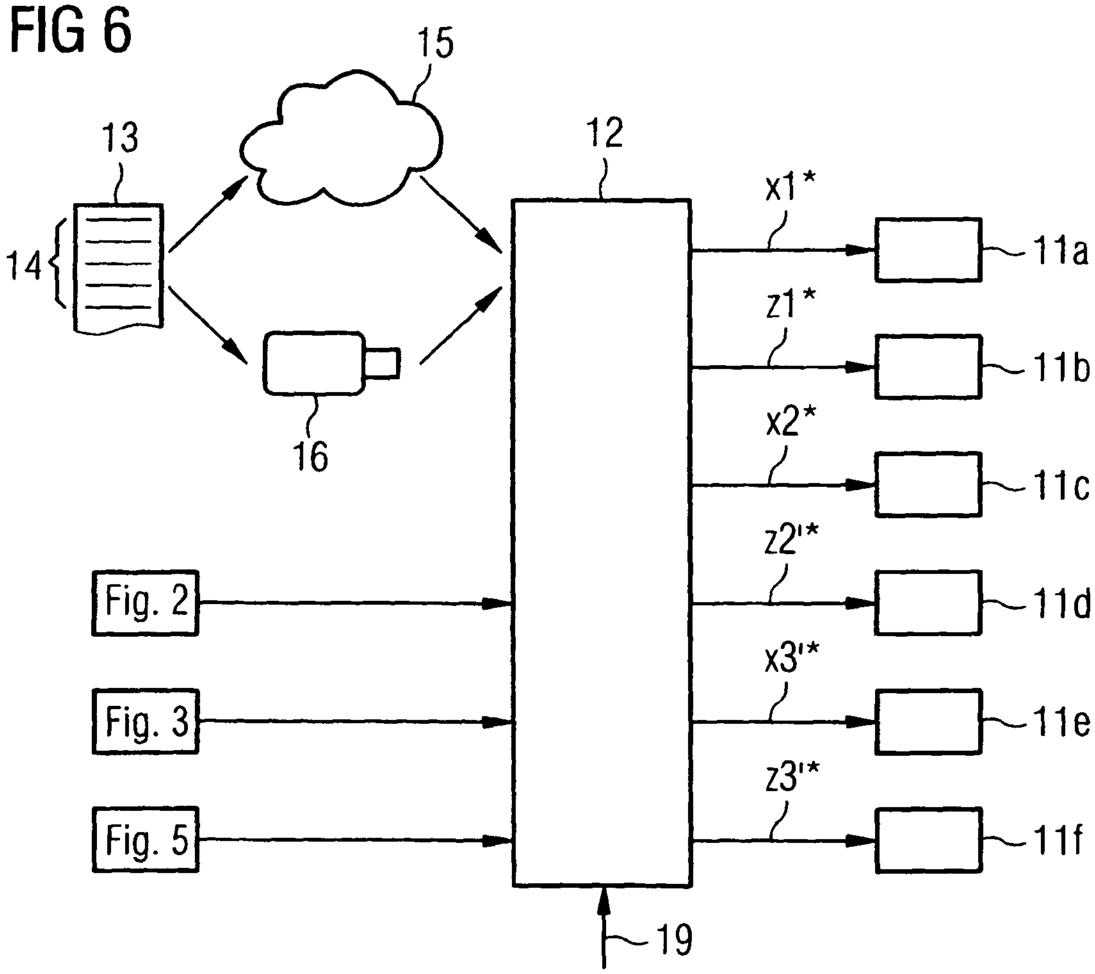
15
13
12
14
x1*
11a
z1*
11b
16
x2*
11c
z2'*
11d
Fig. 2
x3'*
Fig. 3
11e
z3'*
Fig. 5
11f
19

FIG 7

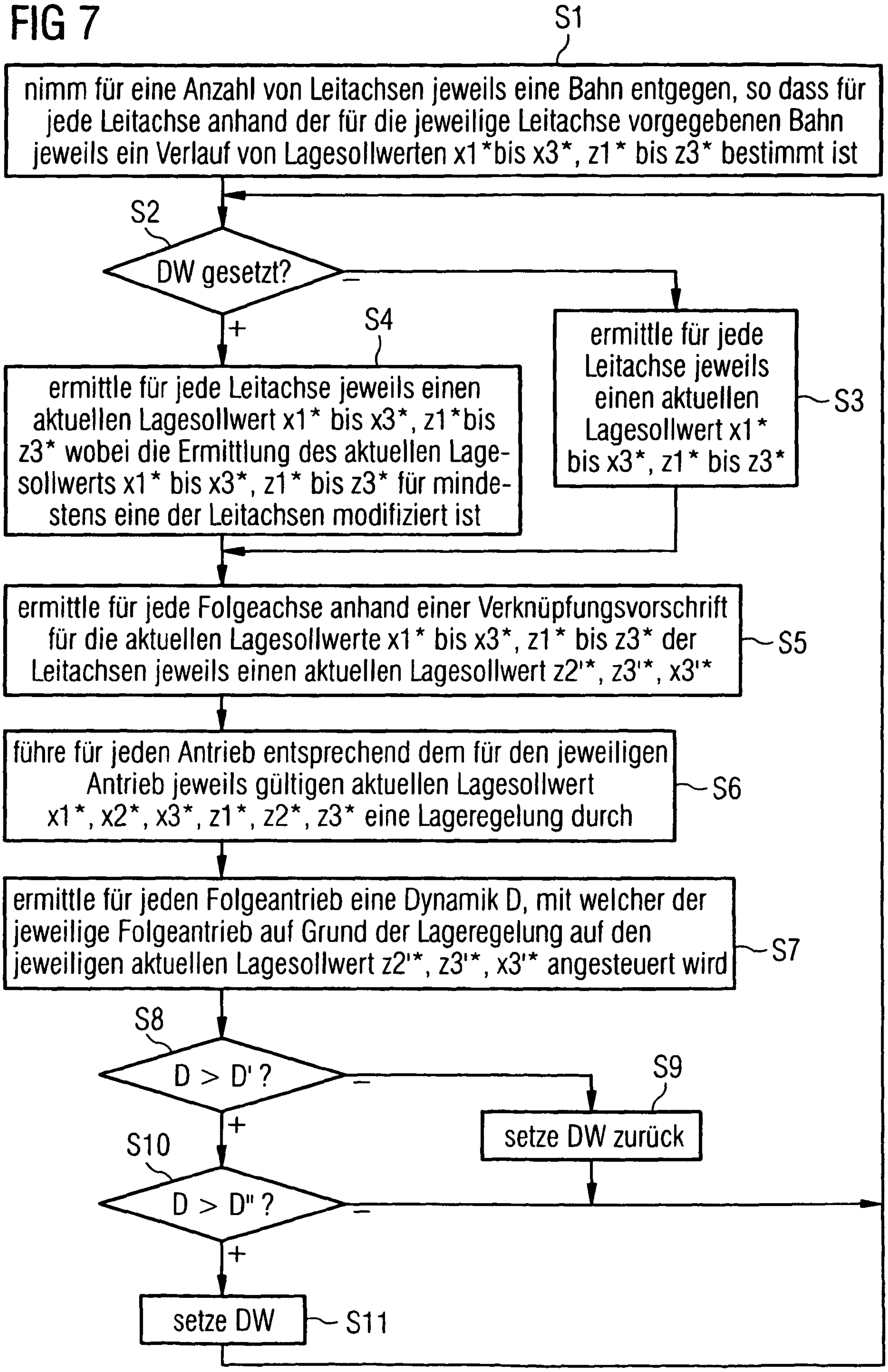
S1
nimm für eine Anzahl von Leitachsen jeweils eine Bahn entgegen, so dass für jede Leitachse anhand der für die jeweilige Leitachse vorgegebenen Bahn jeweils ein Verlauf von Lagesollwerten x1*bis x3*, z1* bis z3* bestimmt ist
S2
DW gesetzt?
+
–
S4
ermittle für jede Leitachse jeweils einen aktuellen Lagesollwert x1* bis x3*, z1*bis z3* wobei die Ermittlung des aktuellen Lagesollwerts x1* bis x3*, z1* bis z3* für mindestens eine der Leitachsen modifiziert ist
ermittle für jede Leitachse jeweils einen aktuellen Lagesollwert x1* bis x3*, z1* bis z3*
S3
ermittle für jede Folgeachse anhand einer Verknüpfungsvorschrift für die aktuellen Lagesollwerte x1* bis x3*, z1* bis z3* der Leitachsen jeweils einen aktuellen Lagesollwert z2'*, z3'*, x3'*
S5
führe für jeden Antrieb entsprechend dem für den jeweiligen Antrieb jeweils gültigen aktuellen Lagesollwert x1*, x2*, x3*, z1*, z2*, z3* eine Lageregelung durch
S6
ermittle für jeden Folgeantrieb eine Dynamik D, mit welcher der jeweilige Folgeantrieb auf Grund der Lageregelung auf den jeweiligen aktuellen Lagesollwert z2'*, z3'*, x3'* angesteuert wird
S7
S8
D > D' ?
–
+
S9
setze DW zurück
S10
D > D'' ?
–
+
setze DW
S11

FIG 8

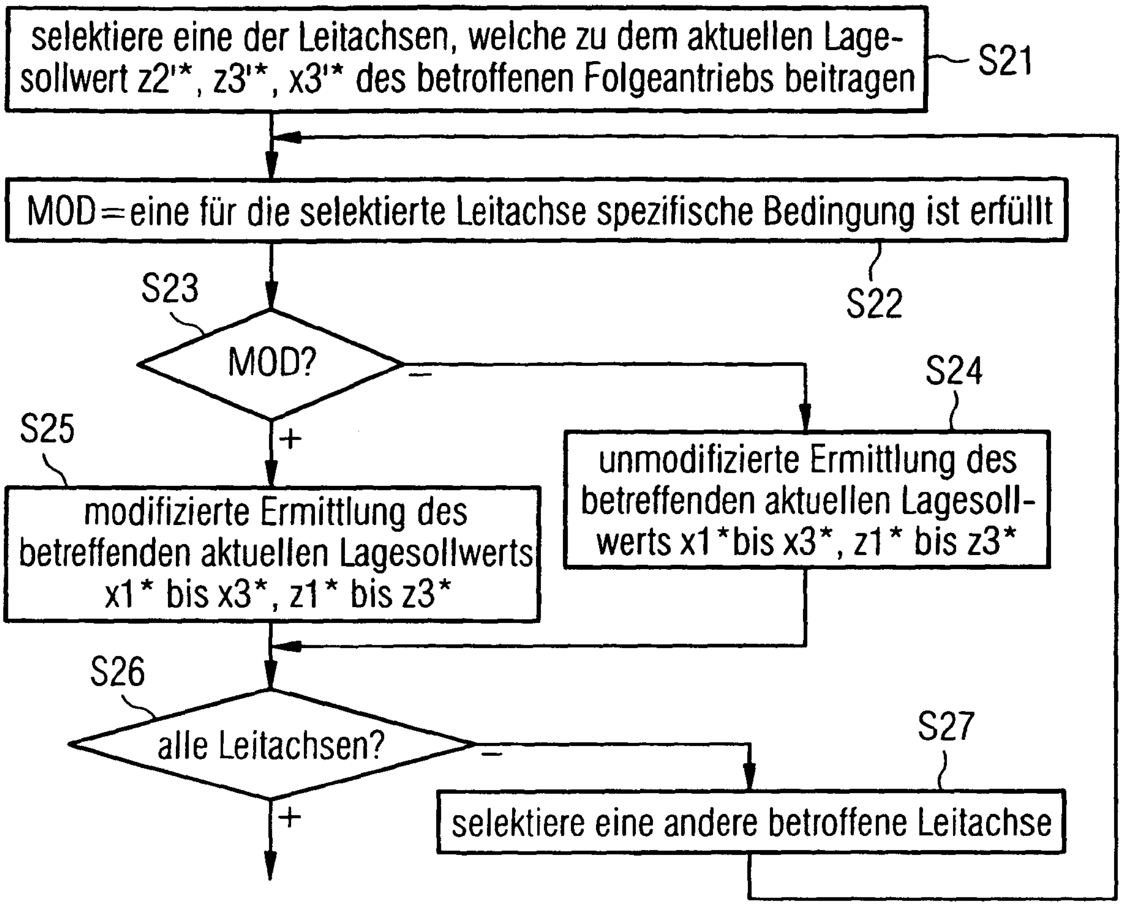
selektiere eine der Leitachsen, welche zu dem aktuellen Lagesollwert z2'*, z3'*, x3'* des betroffenen Folgeantriebs beitragen
S21
MOD=eine für die selektierte Leitachse spezifische Bedingung ist erfüllt
S22
S23
MOD?
–
+
S24
unmodifizierte Ermittlung des betreffenden aktuellen Lagesollwerts x1*bis x3*, z1* bis z3*
S25
modifizierte Ermittlung des betreffenden aktuellen Lagesollwerts x1* bis x3*, z1* bis z3*
S26
alle Leitachsen?
–
+
S27
selektiere eine andere betroffene Leitachse

FIG 9

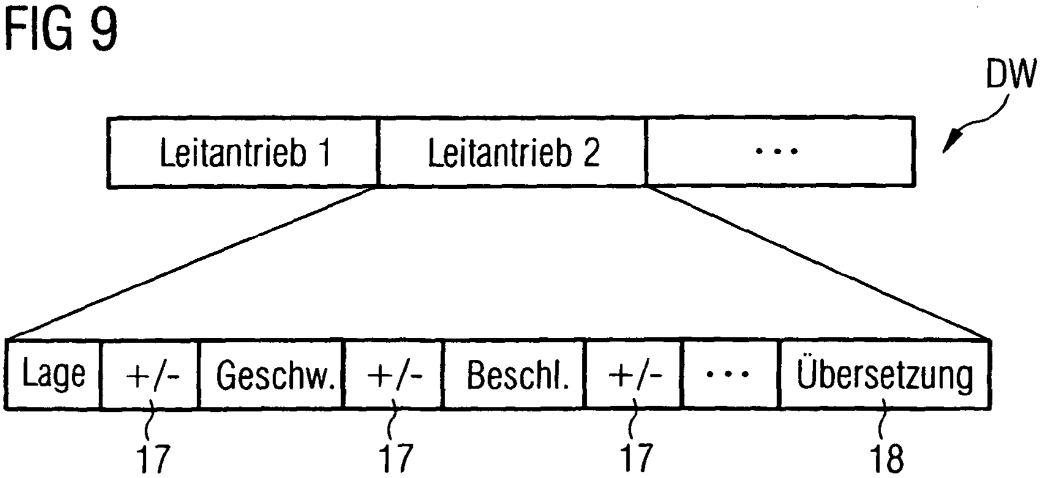
DW
Leitantrieb 1
Leitantrieb 2
...
Lage
+/-
Geschw.
+/-
Beschl.
+/-
...
Übersetzung
17
17
17
18

FIG 10

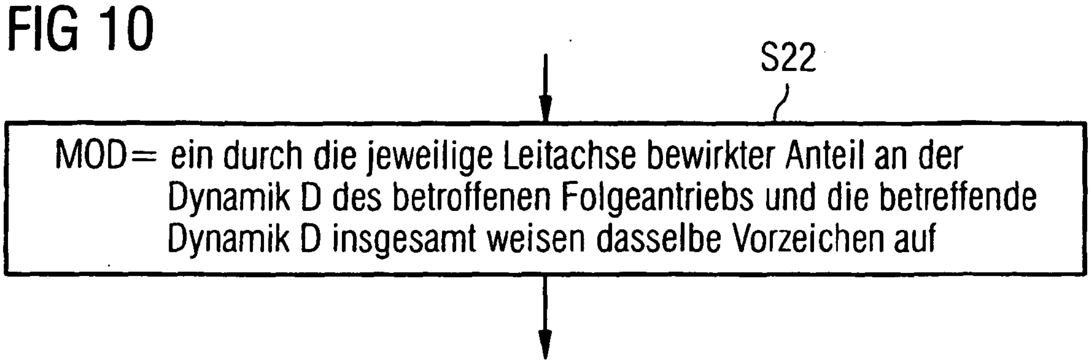


FIG 11

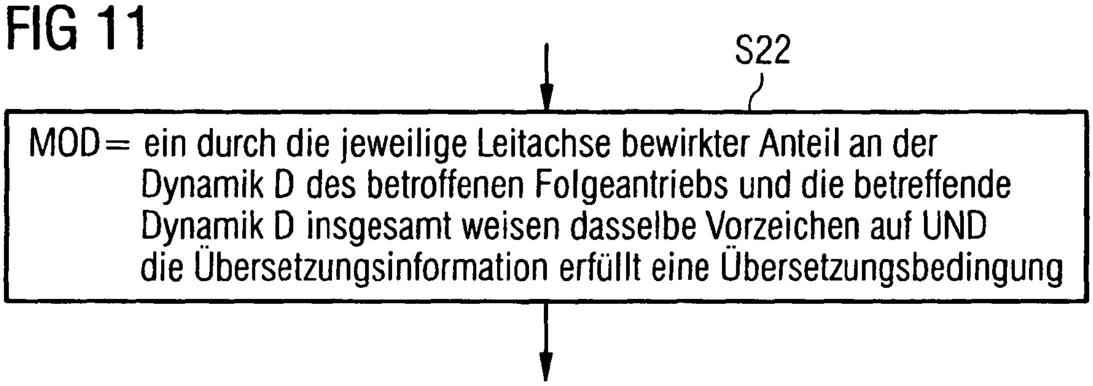


FIG 12

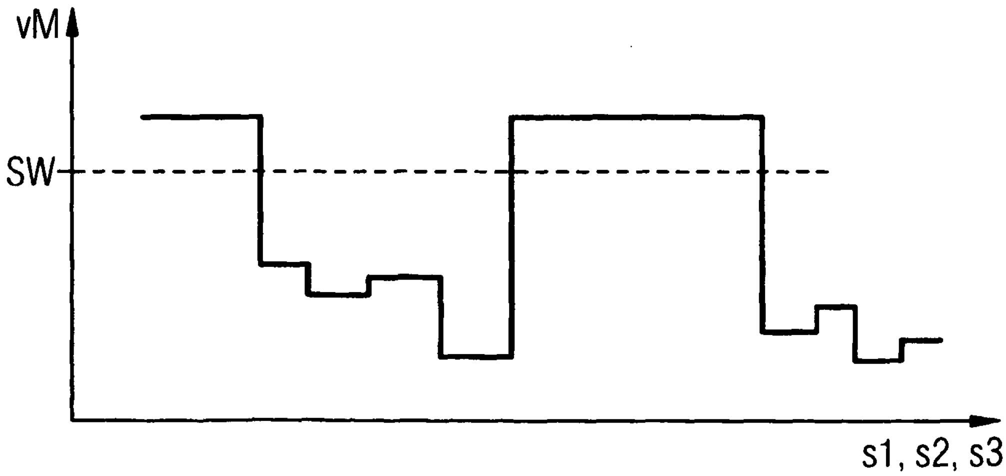

FIG 13

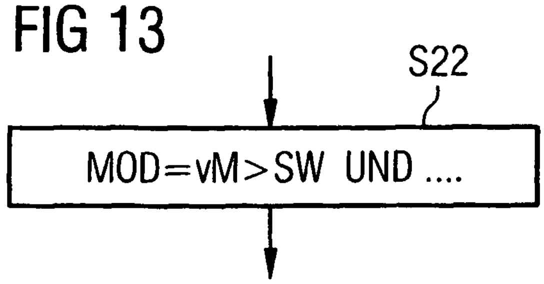


FIG 14

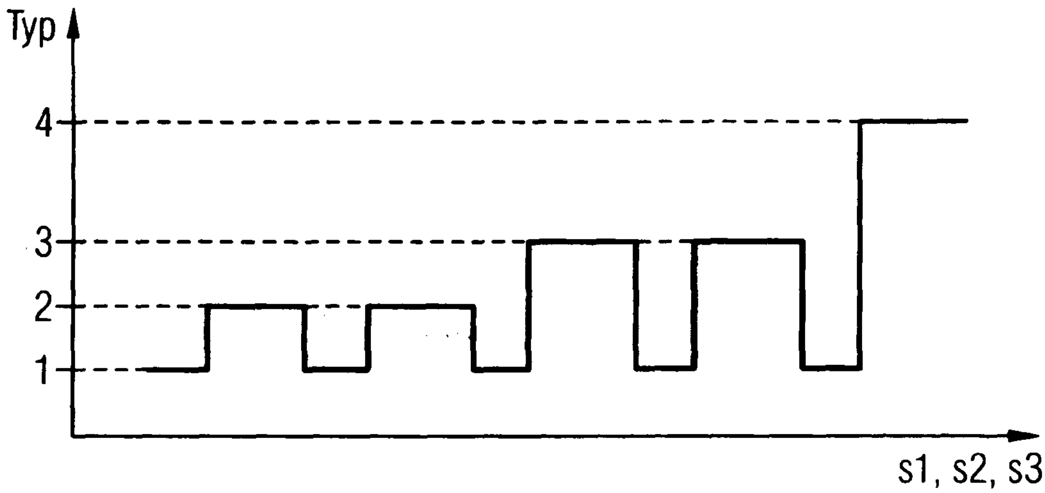


FIG 15

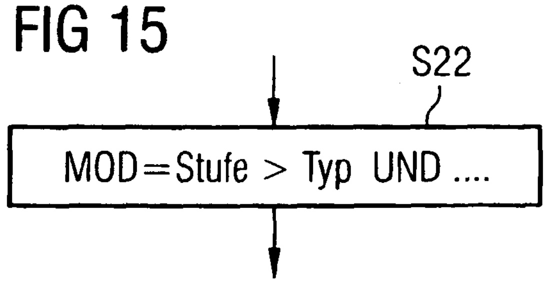


FIG 16

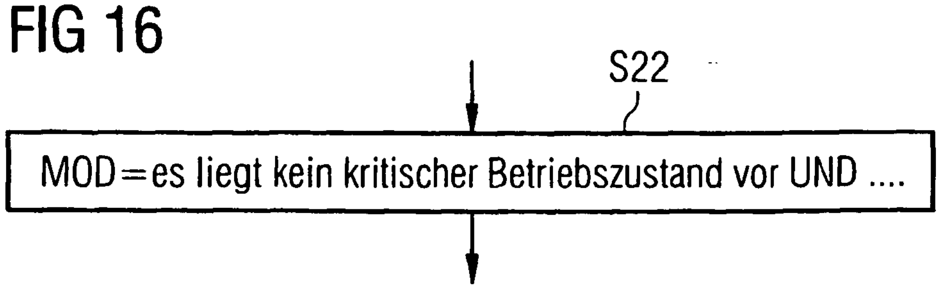

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1353251 A2